# EUROPÄISCHE PATENTANMELDUNG

(11) **EP 3 594 619 A1**
(43) Veröffentlichungstag der Anmeldung: **15.01.2020**
(21) Anmeldenummer: 18182811.2
(22) Anmeldetag: 11.07.2018
(51) Int. Cl.: G01C 15/00, F16M 11/00, G12B 9/04

(54) **SCHUTZVORRICHTUNG FÜR EIN MESSGERÄT**

(71) Anmelder: Hilti Aktiengesellschaft, 9494 Schaan (LI)
(72) Erfinder: Siegler, Ralf, 88289 Waldburg (DE); Lohner, Ralph, 88131 Lindau (DE)
(74) Vertreter: Hilti Aktiengesellschaft Corporate Intellectual Property

(57) **Zusammenfassung**

Schutzvorrichtung (10) für ein Messgerät, das auf einem Stativ (12) angeordnet ist, mit einem Airbag (14), der im aufgeblasenen Zustand einen zylinderförmigen Innenraum umschließt.

## Beschreibung

### Technisches Gebiet

Die vorliegende Erfindung betrifft eine Schutzvorrichtung für ein Messgerät gemäß dem Oberbegriff des Anspruchs 1.

### Stand der Technik

Messgeräte, wie Totalstationen, Laserscanner, 2D-Layoutgeräte und Rotationslaser, werden im Innen- und Außenbereich für Nivellier-, Markierungs- und Messaufgaben eingesetzt. Die Messgeräte werden in der Regel auf einem Stativ befestigt, dass im Innen- oder Außenbereich an der gewünschten Position aufgestellt wird. Dabei kann es zu Unfällen kommen, bei denen Messgerät und Stativ umkippen und auf den Untergrund oder umliegende Gegenstände stürzen. Empfindliche Messgeräte können irreparabel beschädigt werden. Dies verursacht zum einen Kosten für die Reparatur oder den Ersatz des Messgerätes, außerdem steht kein Messgerät zur Verfügung, bis die Reparatur oder der Ersatz des Messgerätes erfolgt ist.

Um Schäden an Messgeräten durch Stürze zu vermeiden, sind Schutzvorrichtungen mit einem Airbag bekannt. KR 101474718 B1 offenbart eine derartige Schutzvorrichtung für ein als Totalstation ausgebildetes Messgerät. Bei einem Kippsturz wird ein als Kissen ausgebildeter Airbag aufgeblasen, der sich zwischen Untergrund und Messgerät legt und dadurch einen direkten Aufprall des Messgerätes auf den Untergrund verhindert. Die Schutzvorrichtung ist als separates Zubehörteil ausgebildet, dass zwischen dem Messgerät und dem Stativ angeordnet wird. Die Schutzvorrichtung umfasst ein Gehäuse, vier Airbags, eine Befülleinrichtung mit einem gasgefüllten Gasbehälter, einer Kontrolleinrichtung und einer Energiequelle sowie eine Verbindungsleitung, die die Airbags mit der Befülleinrichtung verbindet. Die vier Airbags sind im gefalteten Zustand im Gehäuse der Schutzvorrichtung angeordnet, wobei jeder der vier Airbags einem Winkelbereich zugeordnet wird. Mithilfe einer Sensoreinrichtung werden die Kipprichtung des Messgerätes und der zugeordnete Airbag ermittelt. Der Gasbehälter zum Befüllen der Airbags ist über eine Leitung mit den Airbags verbunden und wird in der Nähe des Stativs aufgestellt.

Die aus KR 101474718 B1 bekannte Schutzvorrichtung für ein Messgerät hat den Nachteil, dass vier Airbags erforderlich sind und die Befülleinrichtung außerhalb des Gehäuses angeordnet ist. Dies führt zu einer Schutzvorrichtung, die den Nutzer beim Betrieb des Messgerätes behindern kann, der Nutzer kann über den Gasbehälter, der neben dem Stativ aufgestellt ist, stolpern und einen Kippsturz des Messgerätes verursachen. Wenn das Messgerät im Übergangsbereich zwischen zwei benachbarten Airbags aufprallt, besteht ein Risiko, dass das Messgerät vom Airbag kippt oder rollt und trotz Schutzvorrichtung beschädigt wird.

### Darstellung der Erfindung

Die Aufgabe der vorliegenden Erfindung besteht in der Entwicklung einer Schutzvorrichtung für ein Messgerät, das auf einem Stativ befestigt ist. Die Schutzvorrichtung soll sämtliche Komponenten des Messgerätes vor Beschädigung schützen. Dabei sollte die Schutzvorrichtung möglichst kompakt ausgebildet sein und den Nutzer beim Betrieb des Messgerätes möglichst wenig, im Idealfall gar nicht, behindern.

Diese Aufgabe wird bei der eingangs genannten Schutzvorrichtung für ein Messgerät erfindungsgemäß durch die Merkmale des unabhängigen Anspruchs 1 gelöst. Vorteilhafte Weiterbildungen sind in den abhängigen Ansprüchen angegeben.

Erfindungsgemäß ist vorgesehen, dass der Airbag im aufgeblasenen Zustand einen zylinderförmigen Innenraum umschließt. Die erfindungsgemäße Schutzvorrichtung dient zum Schutz von Messgeräten, die auf einem Stativ befestigt sind. Dadurch, dass das Messgerät auf einem Stativ befestigt ist, führen Stöße gegen das Stativ und/oder das Messgerät zu Kippstürzen des Stativs. Die gesamte Anordnung aus Stativ und Messgerät kippt in der Regel über ein Stativbein oder zwei Stativbeine und das Messgerät nähert sich im Bogen dem Untergrund. Die Bereiche des Messgerätes, die zuerst auf den Untergrund aufprallen, lassen sich gut identifizieren und mithilfe des Airbags schützen.

Der Airbag ist so ausgebildet, dass er im aufgeblasenen Zustand einen zylinderförmigen Innenraum umschließt, in dem sich das Messgerät befindet. Da das Messgerät bei einem Kippsturz mit dem Stativ auf der Seite aufprallt, bietet der Airbag einen ausreichenden Schutz. Der Airbag umgibt das Messgerät und verteilt die beim Aufprall eingeleitete Energie; dabei wird möglichst wenig Energie auf das Messgerät übertragen. Der zylinderförmige Innenraum kann aus mehreren zylinderförmigen Abschnitten zusammengesetzt sein, die Form des zylinderförmigen Innenraums wird an die Form des Messgerätes angepasst.

Bevorzugt weist der Airbag eine erste Stabilisierungskammer, eine Prallkammer und eine zweite Stabilisierungskammer auf, wobei die erste Stabilisierungskammer und die Prallkammer gasaustauschend verbunden sind und die Prallkammer und die zweite Stabilisierungskammer gasaustauschend verbunden sind. Als Prallkammer wird eine Kammer des Airbags bezeichnet, über die beim Aufprall auf einen Untergrund die Energieeinleitung erfolgt, und als Stabilisierungskammern werden Kammern des Airbags bezeichnet, die die Form des Airbags stabilisieren. Bei einem Kippsturz erfolgt die Energieeinleitung über die Prallkammer, die eingeleitete Energie wird anschließend im Airbag verteilt und abgebaut. Dabei wird möglichst wenig Energie auf das Messgerät, das sich im zylinderförmigen Innenraum des Airbags befindet, übertragen. Die Prallkammer wird ringförmig ausgebildet und schützt die Bereiche des Messgerätes, die bei einem Aufprall des Messgerätes zuerst den Untergrund berühren. Die Prallkammer ist so gestaltet, dass sie an der Außenseite des Airbags gegenüber der ersten Stabilisierungskammer und gegenüber der zweiten Stabilisierungskammer vorsteht.

Besonders bevorzugt weist die Prallkammer eine Ringbreite auf, die grösser als eine erste Breite der ersten Stabilisierungskammer und grösser als eine zweite Breite der zweiten Stabilisierungskammer ist. Über die Ringbreite der Prallkammer kann erreicht werden, dass die Prallkammer an der Außenseite des Airbags gegenüber der ersten Stabilisierungskammer und gegenüber der zweiten Stabilisierungskammer vorsteht.

Bevorzugt weist die erste Stabilisierungskammer mehrere erste Teilkammern auf, wobei benachbarte erste Teilkammern gasaustauschend verbunden sind. Über die Anzahl und Geometrie der ersten Teilkammern, die die erste Stabilisierungskammer bilden, lässt sich beeinflussen, wie der Energieabbau der beim Aufprall eingeleiteten Energie im Airbag erfolgt. Dabei wird möglichst wenig Energie auf das Messgerät, das sich im zylinderförmigen Innenraum des Airbags befindet, übertragen.

Bevorzugt weist die Prallkammer mehrere erste Teilprallkammern auf, wobei benachbarte erste Teilprallkammern gasaustauschend verbunden sind. Über die Anzahl und Geometrie der ersten Teilprallkammern, die die Prallkammer bilden, lässt sich beeinflussen, wie der Energieabbau der beim Aufprall eingeleiteten Energie im Airbag erfolgt. Dabei wird möglichst wenig Energie auf das Messgerät, das sich im zylinderförmigen Innenraum des Airbags befindet, übertragen.

Bevorzugt weist die zweite Stabilisierungskammer mehrere zweite Teilkammern auf, wobei benachbarte zweite Teilkammern gasaustauschend verbunden sind. Über die Anzahl und Geometrie der zweiten Teilkammern, die die zweite Stabilisierungskammer bilden, lässt sich beeinflussen, wie der Energieabbau der beim Aufprall eingeleiteten Energie im Airbag erfolgt. Dabei wird möglichst wenig Energie auf das Messgerät, das sich im zylinderförmigen Innenraum des Airbags befindet, übertragen.

Bevorzugt weist der Airbag eine Befüllkammer auf, wobei die erste Stabilisierungskammer und die Befüllkammer gasaustauschend verbunden sind. Das Gas strömt nicht direkt in die erste Stabilisierungskammer, sondern strömt zunächst in die Befüllkammer und von dort in die erste Stabilisierungskammer. Die Befüllkammer verteilt das Gas gleichmäßig in der ersten Stabilisierungskammer und überbrückt den Weg zwischen dem Gehäuse der Schutzvorrichtung und der ersten Stabilisierungskammer des Airbags.

Besonders bevorzugt weist die Befüllkammer mehrere Teilkammern auf. Um das Befüllen des Airbags mit Gas zu beschleunigen, kann der Gasbehälter mehrere Verbindungsleitungen aufweisen, die den Gasbehälter mit der Teilkammern der Befüllkammern verbinden.

Besonders bevorzugt weist der Airbag zusätzlich eine weitere Prallkammer und eine dritte Stabilisierungskammer auf, wobei die zweite Stabilisierungskammer und die weitere Prallkammer gasaustauschend verbunden sind und die weitere Prallkammer und die dritte Stabilisierungskammer gasaustauschend verbunden sind. Bei großen Messgeräten oder Messgeräten mit einer unregelmäßigen Form bietet ein Airbag mit einer weiteren Prallkammer und einer dritten Stabilisierungskammer die Möglichkeit, die Energie beim Aufprall über mehrere Prallkammern in den Airbag einzuleiten und gleichmäßiger zu verteilen. Die in die Prallkammer und die weitere Prallkammer eingeleitete Energie wird mithilfe des Gases im Airbag verteilt.

Besonders bevorzugt weist die weitere Prallkammer mehrere zweite Teilprallkammern, wobei benachbarte zweite Teilprallkammern gasaustauschend verbunden sind. Über die Anzahl und Geometrie der zweiten Teilprallkammern, die die Prallkammer bilden, lässt sich beeinflussen, wie der Energieabbau der beim Aufprall eingeleiteten Energie im Airbag erfolgt. Dabei wird möglichst wenig Energie auf das Messgerät, das sich im zylinderförmigen Innenraum des Airbags befindet, übertragen.

Besonders bevorzugt weist die dritte Stabilisierungskammer mehrere dritte Teilkammern auf, wobei benachbarte dritte Teilkammern gasaustauschend verbunden sind. Über die Anzahl und Geometrie der dritten Teilkammern, die die dritte Stabilisierungskammer bilden, lässt sich beeinflussen, wie der Energieabbau der beim Aufprall eingeleiteten Energie im Airbag erfolgt. Dabei wird möglichst wenig Energie auf das Messgerät, das sich im zylinderförmigen Innenraum des Airbags befindet, übertragen.

In einer bevorzugten Ausführung ist in der Verbindungsleitung ein Ventil vorgesehen, das von der Kontrolleinrichtung zwischen einem offenen Zustand und einem geschlossenen Zustand schaltbar ist. Das in den Airbag eingeleitete Gas kann nach dem Auslösen des Airbags langsam über das Ventil entweichen. Alternativ kann der Airbag entleert werden, indem der Gasbehälter aus der Schutzvorrichtung entfernt wird und das Gas dadurch schneller aus dem Airbag entweichen kann. Die für den Airbag verwendeten Materialien sind in der Regel nicht absolut gasundurchlässig, ein geringer Teil des Gases kann durch den Airbag nach außen diffundieren.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine Schutzvorrichtung, die zwischen einem Messgerät und einem Stativ angeordnet ist;
- FIGN. 2A, B: die Schutzvorrichtung der FIG. 1;
- FIGN. 3A, B: die Schutzvorrichtung der FIG. 1 mit einem aufgeblasenen Airbag in einer Ansicht von oben (FIG. 3A) und in einer Seitenansicht (FIG. 3B);
- FIGN. 4A, B: den Airbag der FIGN. 3A, B, der aus mehreren Kammern aufgebaut ist, mit der Verbindung zwischen einer ersten Stabilisierungskammer und einer Prallkammer (FIG. 4A) und der Verbindung zwischen der Prallkammer und einer zweiten Stabilisierungskammer 34 (FIG. 4B); und
- FIGN. 5A, B: einen alternativen Airbag für die Schutzvorrichtung der FIG. 1.

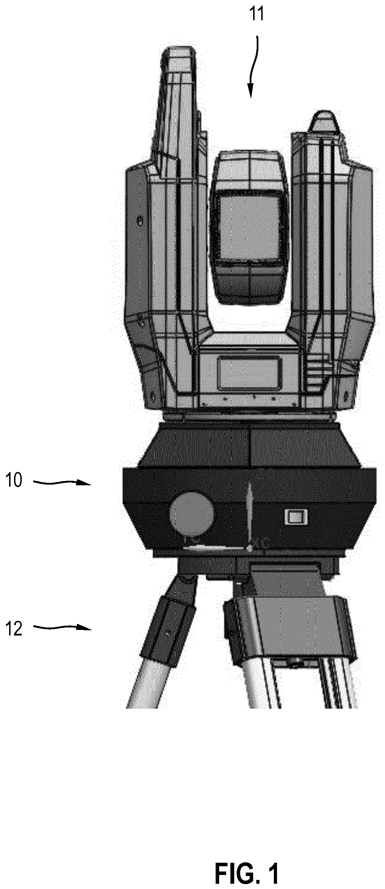

**FIG. 1** zeigt eine Schutzvorrichtung **10**, die zwischen einem Messgerät **11** und einem Stativ **12** angeordnet ist. Üblicherweise werden Messgeräte direkt auf einem Stativ befestigt. Dazu weisen Messgeräte eine normierte Gewindebohrung auf, in die ein normierter Gewindestift des Stativs eingeschraubt wird.

Unter dem Begriff "Messgerät" werden sämtliche Geräte zum Messen von nicht zugänglichen Erscheinungen und Eigenschaften zusammengefasst. Beispiele für Messgeräte sind Totalstationen, Laserscanner, 2D-Layoutgeräte und Rotationslaser.

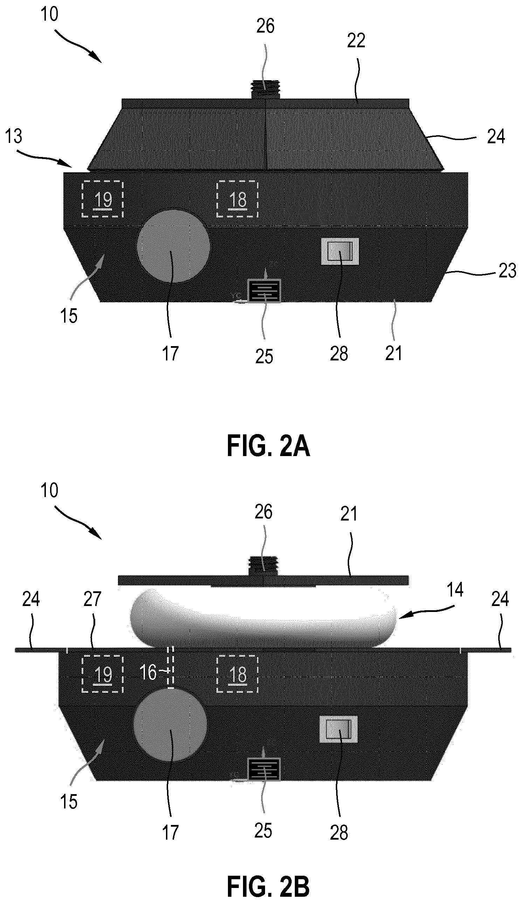

**FIGN. 2A****, B** zeigen die Schutzvorrichtung 10 der Fig. 1. Die Schutzvorrichtung 10 umfasst ein Gehäuse **13**, einen Airbag **14**, eine Befülleinrichtung **15** und eine Verbindungsleitung **16**, die Airbag 14 und Befülleinrichtung 15 miteinander verbindet. Die Befülleinrichtung 15 umfasst einen Gasbehälter **17**, der mit einem Gas gefüllt ist, eine Kontrolleinrichtung **18**, die die Befülleinrichtung 15 und die Verbindungsleitung 16 kontrolliert, und eine Energiequelle **19**, die die erforderliche Energie bereitstellt, um den Airbag 14 mittels der Befülleinrichtung 15 aufzublasen. Unter dem Begriff "Kontrolleinrichtung" werden sämtliche Komponenten zusammengefasst, die den Betrieb der Schutzvorrichtung 10 steuern, regeln und/oder kontrollieren. Die Kontrolleinrichtung 18 umfasst beispielsweise einen Mikrocontroller und einen Beschleunigungssensor, der das Kippen des Messgerätes 11 erfasst.

Das Gehäuse 13 besteht aus mehreren Gehäuseabschnitten, die als Gehäuseunterseite **21**, als Gehäuseoberseite **22**, als untere Seitenflächen **23** und als obere Seitenflächen **24** ausgebildet sind. In der Gehäuseunterseite 21 ist eine Gewindebohrung **25** vorgesehen, die auf den Gewindestift des Stativs 12 aufgeschraubt wird, und in der Gehäuseoberseite 22 ist ein Gewindestift **26** vorgesehen, auf den die Gewindebohrung des Messgerätes 12 aufgeschraubt wird. Zur Unterscheidung werden die Gewindebohrung 25 und der Gewindestift 26 der Schutzvorrichtung 10 im Folgenden als erste Gewindebohrung und erster Gewindestift bezeichnet, die Gewindebohrung des Messgerätes 12 wird als zweite Gewindebohrung bezeichnet und der Gewindestift des Stativs wird als zweiter Gewindestift bezeichnet.

Das Gehäuse 13 ist unterteilt in einen unteren Innenraum und einen oberen Innenraum. Der untere Innenraum wird durch die Gehäuseunterseite 21, die unteren Seitenflächen 23 und eine Trennfläche **27** begrenzt und der obere Innenraum wird durch die Trennfläche 27, die oberen Seitenflächen 24 und die Gehäuseoberseite 22 begrenzt. Der untere Innenraum nimmt die Befülleinrichtung 15 mit dem Gasbehälter 17, der Kontrolleinrichtung 18 und der Energiequelle 19 auf. Im Ausführungsbeispiel wird der Gasbehälter 17 von aussen in das Gehäuse 13 eingeschoben und kann einfach gegen einen neuen Gasbehälter ausgetauscht werden; alternativ kann der Gasbehälter fest im Gehäuse verbaut werden. Der obere Innenraum nimmt den Airbag 14 im gefalteten Zustand auf. Die oberen Seitenflächen 24 sind als Klappflächen ausgebildet, die im Einsatzfall weggeklappt werden, so dass der Airbag 14 mittels der Befülleinrichtung 15 aufgeblasen werden kann. Die Schutzvorrichtung 10 ist mittels eines Schalters **28** ein- und ausschaltbar.

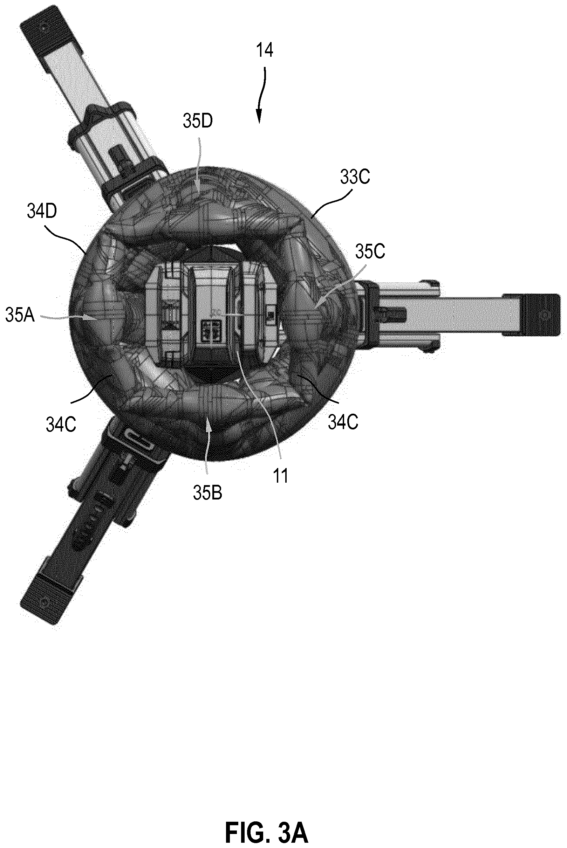

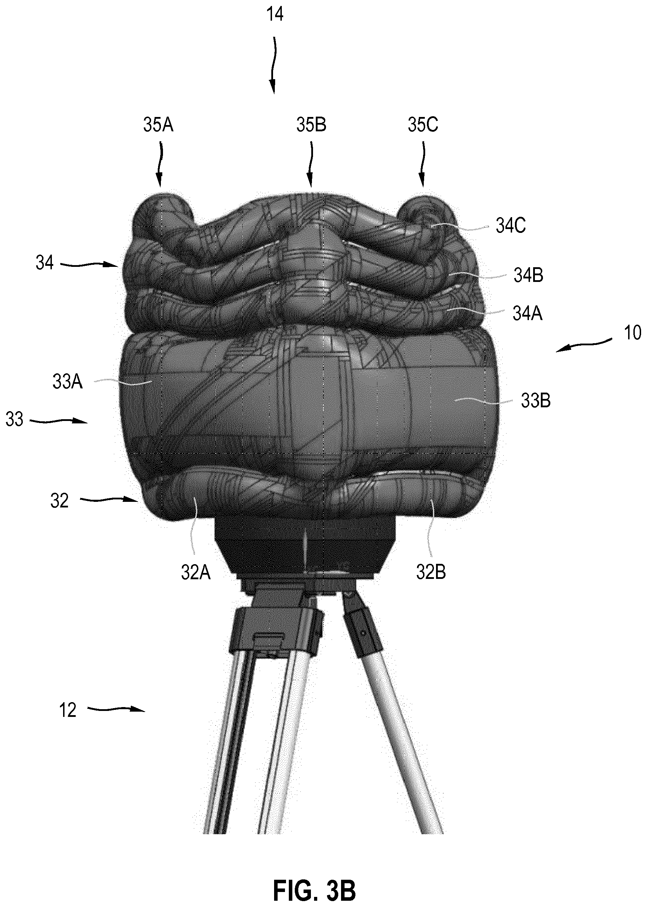

**FIGN. 3A****, B** zeigen den Airbag 14 der Schutzvorrichtung 10 im aufgeblasenen Zustand. Dabei zeigt FIG. 3A den Airbag 14 in einer Ansicht von oben und FIG. 3B den Airbag 14 in einer Seitenansicht.

FIG. 3A zeigt die Schutzvorrichtung 10, die zwischen dem Messgerät 11 und dem Stativ 12 angeordnet ist. Der aufgeblasene Airbag 14 der Schutzvorrichtung 10 umschließt einen zylinderförmigen Innenraum **31**, in dem das Messgerät 11 angeordnet und vor Beschädigungen geschützt ist. Die Form des Innenraumes 31 wird möglichst an die Außengeometrie des Messgerätes 11 angepasst.

Der Airbag 14 umfasst mehrere ringförmige Kammern, die als erste Stabilisierungskammer **32**, als Prallkammer **33** und als zweite Stabilisierungskammer **34** ausgebildet sind. Beim Befüllen des Airbags 14 strömt das Gas in die erste Stabilisierungskammer 32, von dort in die Prallkammer 33 und anschließend in die zweite Stabilisierungskammer 34. Die erste Stabilisierungskammer 32 ist gasaustauschend mit der Prallkammer 33 verbunden und die Prallkammer 33 ist gasaustauschend mit der zweiten Stabilisierungskammer 34 verbunden.

Als Prallkammer wird eine Kammer des Airbags 14 bezeichnet, über die beim Aufprall auf einen Untergrund die Energie-/Krafteinleitung erfolgt, und als Stabilisierungskammern werden Kammern des Airbags 14 bezeichnet, die die Form des Airbags 14 stabilisieren. Dabei wird zwischen einer ersten Stabilisierungskammer und einer zweiten Stabilisierungskammer unterschieden. Beim Befüllen des Airbags 14 wird die erste Stabilisierungskammer zeitlich vor der zweiten Stabilisierungskammer mit Gas gefüllt.

Beim Aufbau des Airbags 14 muss berücksichtigt werden, dass der Airbag in kurzer Zeit vollständig aufgeblasen sein muss, um das Messgerät 11 bei einem Kippsturz zu schützen. Andererseits muss der Airbag 14 eine Form aufweisen, die die beim Sturz in die Prallkammer 33 eingeleitete Energie durch Druckausgleich über das Gas im Airbag verteilt. Die Anpassung der Form des Airbags 14 erfolgt darüber, dass die erste Stabilisierungskammer 32, die Prallkammer 33 und/oder die zweite Stabilisierungskammer 34 in Teilkammern unterteilt werden. Die Unterteilung kann beispielsweise mithilfe von Abnähern erfolgen, die die Querschnittsfläche am Übergang zwischen benachbarten Teilkammern verkleinern.

Die erste Stabilisierungskammer 32 umfasst im Ausführungsbeispiel vier erste Teilkammern **32A, 32B, 32C, 32D**, wobei benachbarte erste Teilkammern gasaustauschend verbunden sind. Die Prallkammer 33 umfasst im Ausführungsbeispiel vier Prallteilkammern **33A, 33B, 33C, 33D**, wobei benachbarte Prallteilkammern gasaustauschend verbunden sind. Die zweite Stabilisierungskammer 34 umfasst im Ausführungsbeispiel drei zweite Teilkammern **34A, 34B, 34C,** wobei einander benachbarte zweite Teilkammern gasaustauschend verbunden sind. Die zweiten Teilkammern 34A, 34B, 34C können ihrerseits wieder in zweite Teilkammern unterteilt sein.

Beim Befüllen des Airbags 14 strömt das Gas in die erste Stabilisierungskammer 32, von dort in die Prallkammer 33 und anschließend in die zweite Stabilisierungskammer 34. Um ein schnelles Aufblasen des Airbags 14 zu ermöglichen, sind die erste Stabilisierungskammer 32, die Prallkammer 33 und die zweite Stabilisierungskammer 34 über Verbindungskanäle **35A, 35B, 35C, 35D** verbunden. Die Querschnittsfläche der Verbindungskanäle ist an das Volumen des verwendeten Gases angepasst.

Das Ausführungsbeispiel der FIGN. 3A, B zeigt einen Airbag mit einer Prallkammer. Alternativ kann der Airbag zwei Prallkammern oder mehr als zwei Prallkammern aufweisen. Die Anzahl an Prallkammern, die ein Airbag aufweist, orientiert sich an der Größe, dem Gewicht, der Fallhöhe und der Form des Messgerätes, das durch den Airbag geschützt werden soll.

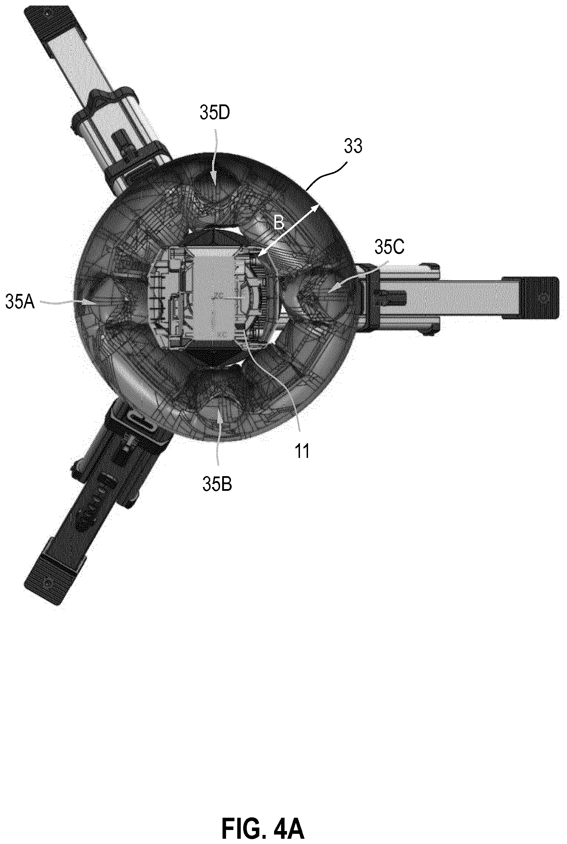

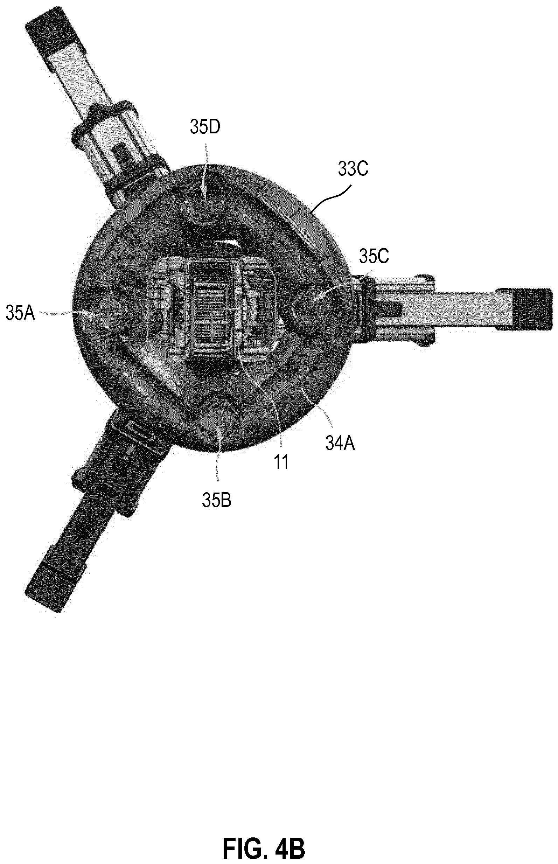

**FIGN. 4A****, B** zeigen die Verbindung zwischen der ersten Stabilisierungskammer 32 und der Prallkammer 33 (FIG. 4A) und die Verbindung zwischen der Prallkammer 33 und der zweiten Stabilisierungskammer 34 (FIG. 4B).

Das Befüllen des Airbags 51 erfolgt über die Verbindungskanäle 35A, 35B, 35C, 35D, die die erste Stabilisierungskammer 32 und die Prallkammer 33 sowie die Prallkammer 33 und die zweite Stabilisierungskammer 34 verbinden. Außerdem ermöglichen die Verbindungskanäle 35A, 35B, 35C, 35D einen Gasaustauch zwischen der Prallkammer 33 und der ersten und zweiten Stabilisierungskammer 32, 34. Die über die Prallkammer 33 beim Aufprall eingeleitete Energie wird über das Gas im Airbag 14 verteilt.

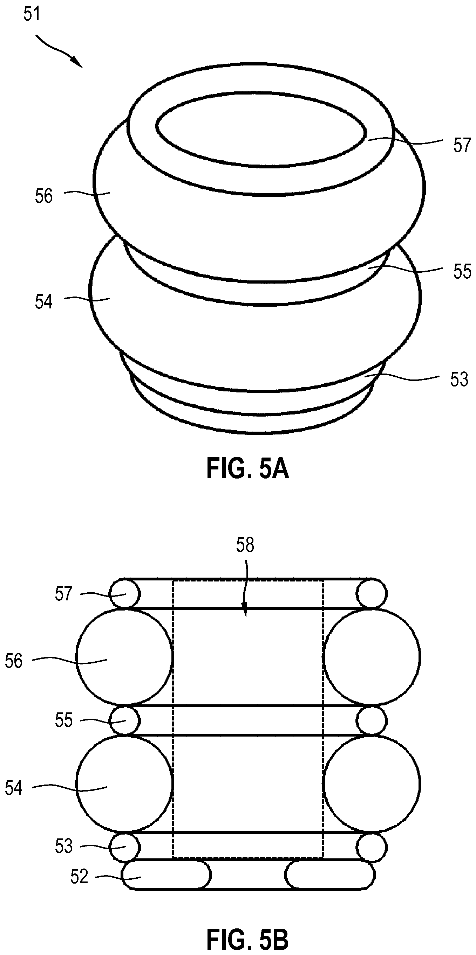

**FIGN. 5A****, B** zeigen einen Airbag **51**, der in der Schutzvorrichtung 10 den Airbag 14 ersetzen kann. Der Airbag 51 umfasst mehrere ringförmige Kammern, die als Befüllkammer **52**, als erste Stabilisierungskammer **53**, als Prallkammer **54**, als zweite Stabilisierungskammer **55**, als weitere Prallkammer **56** und als dritte Stabilisierungskammer **57** ausgebildet sind. Zur Unterscheidung werden die Prallkammer 54 als erste Prallkammer und die weitere Prallkammer 56 als zweite Prallkammer bezeichnet. Der Airbag 51 umschließt einen zylinderförmigen Innenraum **58.**

Bei großen Messgeräten oder Messgeräten mit einer unregelmäßigen Form bietet der Airbag 51 mit der Prallkammer 54 und der weiteren Prallkammer 56 die Möglichkeit, die Energie beim Aufprall über die beiden Prallkammern 54, 56 in den Airbag 51 einzuleiten und gleichmäßiger im Airbag 51 zu verteilen. Die in die Prallkammer 54 und die weitere Prallkammer 56 eingeleitete Energie wird mithilfe des Gases im Airbag 51 verteilt. Die erste Stabilisierungskammer 53, die zweite Stabilisierungskammer 55 und die dritte Stabilisierungskammer 57 dienen zur Stabilisierung des Airbags 51.

Beim Befüllen des Airbags 51 strömt das Gas aus dem Gasbehälter 17 zunächst in die Befüllkammer 52, von dort in die erste Stabilisierungskammer 53, von dort in die Prallkammer 54, von dort in die zweite Stabilisierungskammer 55, von dort in die weitere Prallkammer 56 und von dort in die dritte Stabilisierungskammer 57. Die erste Stabilisierungskammer 53 ist gasaustauschend mit der Prallkammer 54 verbunden, die Prallkammer 54 ist gasaustauschend mit der zweiten Stabilisierungskammer 55 verbunden, die zweite Stabilisierungskammer 55 ist gasaustauschend mit der weiteren Prallkammer 56 verbunden und die weitere Prallkammer 56 ist gasaustauschend mit der dritten Stabilisierungskammer 57 verbunden.

## Patentansprüche

1. Schutzvorrichtung (10) für ein Messgerät (11), das auf einem Stativ (12) anordbar ist, aufweisend:
▪ ein Gehäuse (13) mit einer Gewindebohrung (25) und einem Gewindestift (26), wobei die Gewindebohrung (25) in einer Gehäuseunterseite (21) des Gehäuses (13) und der Gewindestift (26) in einer Gehäuseoberseite (22) des Gehäuses (13) vorgesehen ist,
▪ einen Airbag (14; 51),
▪ eine Befülleinrichtung (15) mit mindestens einem gasgefüllten Gasbehälter (17), einer Kontrolleinrichtung (18) und einer Energiequelle (19), und
▪ eine Verbindungsleitung (16), die den Airbag (14; 51) und die Befülleinrichtung (15) gasaustauschend verbindet,
**dadurch gekennzeichnet, dass** der Airbag (14; 51) im aufgeblasenen Zustand einen zylinderförmigen Innenraum (31; 58) umschließt.

2. Vorrichtung nach Anspruch 1, **dadurch gekennzeichnet, dass** der Airbag (14; 51) eine erste Stabilisierungskammer (32; 53), eine Prallkammer (33; 54) und eine zweite Stabilisierungskammer (34; 55) aufweist, wobei die erste Stabilisierungskammer (32; 53) und die Prallkammer (33; 54) gasaustauschend verbunden sind und die Prallkammer (33; 54) und die zweite Stabilisierungskammer (34; 55) gasaustauschend verbunden sind.

3. Vorrichtung nach Anspruch 2, **dadurch gekennzeichnet, dass** die Prallkammer (33) eine Ringbreite (B) aufweist, die grösser als eine erste Breite (bi) der ersten Stabilisierungskammer (32) und grösser als eine zweite Breite (b₂) der zweiten Stabilisierungskammer (34) ist.

4. Vorrichtung nach einem der Ansprüche 2 bis 3, **dadurch gekennzeichnet, dass** die erste Stabilisierungskammer (32) mehrere erste Teilkammern (32A, 32B, 32C, 32D) aufweist, wobei benachbarte erste Teilkammern gasaustauschend verbunden sind.

5. Vorrichtung nach einem der Ansprüche 2 bis 4, **dadurch gekennzeichnet, dass** die Prallkammer (33) mehrere erste Teilprallkammern (33A, 33B, 33C, 33D) aufweist, wobei benachbarte erste Teilprallkammern gasaustauschend verbunden sind.

6. Vorrichtung nach einem der Ansprüche 2 bis 5, **dadurch gekennzeichnet, dass** die zweite Stabilisierungskammer (34) mehrere zweite Teilkammern (34A, 34B, 34C) aufweist, wobei benachbarte zweite Teilkammern gasaustauschend verbunden sind.

7. Vorrichtung nach Anspruch 2, **dadurch gekennzeichnet, dass** der Airbag (51) eine Befüllkammer (52) aufweist, wobei die erste Stabilisierungskammer (53) und die Befüllkammer (52) gasaustauschend verbunden sind.

8. Vorrichtung nach Anspruch 7, **dadurch gekennzeichnet, dass** die Befüllkammer (52) mehrere Teilkammern aufweist.

9. Vorrichtung nach einem der Ansprüche 2 bis 8, **dadurch gekennzeichnet, dass** der Airbag (51) zusätzlich eine weitere Prallkammer (56) und eine dritte Stabilisierungskammer (57) aufweist, wobei die zweite Stabilisierungskammer (55) und die weitere Prallkammer (56) gasaustauschend verbunden sind und die weitere Prallkammer (56) und die dritte Stabilisierungskammer (57) gasaustauschend verbunden sind.

10. Vorrichtung nach Anspruch 9, **dadurch gekennzeichnet, dass** die weitere Prallkammer (56) mehrere zweite Teilprallkammern aufweist, wobei benachbarte zweite Teilprallkammern gasaustauschend verbunden sind.

11. Vorrichtung nach einem der Ansprüche 9 bis 10, **dadurch gekennzeichnet, dass** die dritte Stabilisierungskammer (57) mehrere dritte Teilkammern aufweist, wobei benachbarte dritte Teilkammern gasaustauschend verbunden sind.

12. Vorrichtung nach einem der Ansprüche 1 bis 11, **dadurch gekennzeichnet, dass** in der Verbindungsleitung (18) ein Ventil vorgesehen ist, das von der Kontrolleinrichtung (18) zwischen einem offenen Zustand und einem geschlossenen Zustand schaltbar ist.
